(19)

Europäisches
Patentamt

European
Patent Office

Office européen
des brevets

(11) **EP 3 745 341 A1**

(12) **EUROPEAN PATENT APPLICATION**

(43) Date of publication:
**02.12.2020 Bulletin 2020/49**

(51) Int Cl.:
***G06Q 30/02*** *(2012.01)*

(21) Application number: **20174735.9**

(22) Date of filing: **14.05.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.05.2019 US 201916424193**

(71) Applicant: **Sony Interactive Entertainment LLC
San Mateo, CA 94404 (US)**

(72) Inventors:
• **ZHANG, Xiaohan
San Mateo, California 94404 (US)**
• **MELLI, Gabor Settimio
San Mateo, California 94404 (US)**

(74) Representative: **D Young & Co LLP
120 Holborn
London EC1N 2DY (GB)**

(54) **ENGAGEMENT RELEVANCE MODEL OFFLINE EVALUATION METRIC**

(57) Engagement relevance models useful for e-commerce and computer simulation purposes are evaluated offline against ground truth to determine which is the best model at predicting various metrics, such as what products are likely to be purchased, how long a user remains on a web page, and how users will rank e-commerce items. Evaluation includes summing absolute errors between ground truth and model predictions for each of multiple users, normalizing the sum of all prediction statistics to unity. Weights may be applied to reduce skew in evaluation by accounting for biases toward disproportionately popular items.

EP 3 745 341 A1

**Description**

**FIELD**

The application relates to evaluating engagement relevance models.

**BACKGROUND**

Relevance models are used to predict various e-commerce metrics including what products a particular user is likely to buy, how long a particular user is likely to remain on a particular web page, and how a user is likely to rank multiple items. An accurate relevance model plainly is important in modern commerce to personalize customer experiences based on such factors as how customers purchase the products, how customers interact with news feeds, how customers interact with media contents, and so on. In order to provide these experiences, organizations need to build relevance models that would provide scores of how users are related to various type of items.

As recognized herein, existing methods for evaluating the effectiveness of relevance models do not adequately account for multiple types of ground truth, such as binary types (e.g., whether a user purchased an item or not), multivariate types (e.g., ranks of the similarity of items to an anchor item), and numeric types (e.g., dwell time on a web page). Moreover, existing methods for evaluating the effectiveness of relevance models are inflexible in terms of having one relevance metric accounting for not only classification problems, ranking problems, but also estimation problems. Moreover, existing methods for evaluating the effectiveness of relevance models are inflexible in handling special cases, for example, encouraging variety in recommended products, and applying position-based ranking at the same time. Moreover, existing methods for evaluating the effectiveness of relevance models do not handle the three requirements at the same time: i) accounting for differences in the proportional importance of items, which can skew the results; ii) adequately penalizing incorrect predictions; iii) adequately distinguish models in the face of equally good results. Additionally, the metric for evaluating the effectiveness of relevance models need to communicate results of the evaluation easily and in a quantifiable manner (for example, with a metric constrained between in the fixed range, unlike RMSE and MAE, two existing metrics for regression models).

**SUMMARY**

Accordingly, a device includes at least one computer storage that is not a transitory signal and that in turn includes instructions executable by at least one processor to, for a first model, determine, for each of plural sets of a user and an item, an absolute difference between a first value representing a model prediction of a user interaction with the item, and a second value representing an actual user interaction with the item. The instructions are executable to, for each of a number of users, across all items, normalize the first value such that the values sum to unity. Similar normalization instructions are applied to the second value. The instructions are executable to, for each of a number of users, sum the absolute differences determined for plural items to render a user sum, sum the user sums to render a total, and divide the total by the number of users to render a probability absolute error (PAE). A PAE is similarly determined for at least a second model. The first model is output as being a better model based on the first model having a lower PAE than the second model, otherwise the second model is output as the better model, and the better model is used for providing e-commerce, including computer simulations.

In some implementations, to account for special cases, for example, evaluation skew due to disproportionately popular test interactions, the instructions can be executable to, prior to summing the user sums, multiply at least some user sums by a sum of weighted second values representing the actual user interactions with the item to render weighted user sums. The instructions may be further executable to, for each target user, for each item that the model predicted this target will be non-negative (e.g., the user will purchase/read/click/dwell on this item), calculate the value of weight $w\_l * $ predicted probability $p\_u,l$, sum over all items for each target user, and sum the sum over all users to render a weighted PAE (WPAE). In this embodiment, the instructions can be executable to output the first model is being a better model based on the first model having a lower WPAE than the second model, and otherwise output the second model as the better model for use of the better model in providing e-commerce.

In another aspect, a computer-implemented method includes receiving plural engagement relevance models useful for e-commerce and computer simulation purposes. The method includes evaluating predictions of the plural models offline against ground truth to determine which is the better model at predicting at least one metric. The evaluating includes normalizing to unity the ground truth and model predictions for each of multiple users, summing absolute errors between ground truth and model predictions for each of multiple users, sum the user sums to render a total, and divide the total by the number of users to render a probability absolute error (PAE).

In another aspect, an apparatus includes at least one processor and at least one computer storage accessible to the processor and including instructions executable by the processor to determine, for a first model, a first probability absolute error (PAE) having a value of between zero and two, inclusive. The instructions are executable to determine, for a second model, a second PAE having a value of between zero and two, inclusive, and responsive to the first PAE being less than the second PAE, use the first model to predict user interactions in e-commerce. The instructions are executable to, responsive to the first PAE being greater than the second PAE, use the second model to predict user interactions in e-commerce.

The details of the present application, both as to its structure and operation, can best be understood in reference to the accompanying drawings, in which like reference numerals refer to like parts, and in which:

**BRIEF DESCRIPTION OF THE DRAWINGS**

Figure 1 is a block diagram of an example system including an example in accordance with present principles;
Figure 2 is a block diagram of an example architecture according to present principles;
Figure 3 is a flow chart of example logic consistent with present principles for determining PAE;
Figure 4 is a flow chart of example logic consistent with present principles for determining WPAE;
Figures 5 and 6 illustrate data structures showing inputs to the evaluation;
Figures 7 and 8 respectively indicate, for single positive item scenarios, a perfect ("oracle") model, and a completely misguided model;
Figure 9 indicates an average model;
Figures 10-13 respectively illustrate, for multiple positive items, a perfect model, a good model, consistent models, and a misguided model; and
Figures 14-16 respectively illustrate comparisons of PAE to WPAE for example models.

**DETAILED DESCRIPTION**

This disclosure relates generally to computer ecosystems including aspects of consumer electronics (CE) device networks such as but not limited to computer simulation networks such as computer game networks. A system herein may include server and client components, connected over a network such that data may be exchanged between the client and server components. The client components may include one or more computing devices including game consoles such as Sony PlayStation® or a game console made by Microsoft or Nintendo or other manufacturer virtual reality (VR) headsets, augmented reality (AR) headsets, portable televisions (e.g. smart TVs, Internet-enabled TVs), portable computers such as laptops and tablet computers, and other mobile devices including smart phones and additional examples discussed below. These client devices may operate with a variety of operating environments. For example, some of the client computers may employ, as examples, Linux operating systems, operating systems from Microsoft, or a Unix operating system, or operating systems produced by Apple Computer or Google. These operating environments may be used to execute one or more browsing programs, such as a browser made by Microsoft or Google or Mozilla or other browser program that can access websites hosted by the Internet servers discussed below. Also, an operating environment according to present principles may be used to execute one or more computer game programs.

Servers and/or gateways may include one or more processors executing instructions that configure the servers to receive and transmit data over a network such as the Internet. Or, a client and server can be connected over a local intranet or a virtual private network. A server or controller may be instantiated by a game console such as a Sony PlayStation®, a personal computer, etc.

Information may be exchanged over a network between the clients and servers. To this end and for security, servers and/or clients can include firewalls, load balancers, temporary storages, and proxies, and other network infrastructure for reliability and security. One or more servers may form an apparatus that implement methods of providing a secure community such as an online social website to network members.

As used herein, instructions refer to computer-implemented steps for processing information in the system. Instructions can be implemented in software, firmware or hardware and include any type of programmed step undertaken by components of the system.

A processor may be any conventional general-purpose single- or multi-chip processor that can execute logic by means of various lines such as address lines, data lines, and control lines and registers and shift registers.

Software modules described by way of the flow charts and user interfaces herein can include various subroutines, procedures, etc. Without limiting the disclosure, logic stated to be executed by a particular module can be redistributed to other software modules and/or combined together in a single module and/ or made available in a shareable library.

Present principles described herein can be implemented as hardware, software, firmware, or combinations thereof; hence, illustrative components, blocks, modules, circuits, and steps are set forth in terms of their functionality.

The functions and methods described below, when implemented in software, can be written in an appropriate language such as but not limited to Java, C# or C++, and can be stored on or transmitted through a computer-readable storage medium such as a random access memory (RAM), read-only memory (ROM), electrically erasable programmable read-only memory (EEPROM), compact disk read-only memory (CD-ROM) or other optical disk storage such as digital versatile disc (DVD), magnetic disk storage or other magnetic storage devices including removable thumb drives, etc. A connection may establish a computer-readable medium. Such connections can include, as examples, hard-wired cables including fiber optics and coaxial wires and digital subscriber line (DSL) and twisted pair wires. Such connections may include wireless communication connections including infrared and radio.

Components included in one embodiment can be used in other embodiments in any appropriate combination. For example, any of the various components described herein and/or depicted in the Figures may be combined, interchanged or excluded from other embodiments.

"A system having at least one of A, B, and C" (likewise "a system having at least one of A, B, or C" and "a system having at least one of A, B, C") includes systems that have A alone, B alone, C alone, A and B together, A and C together, B and C together, and/or A, B, and C together, etc.

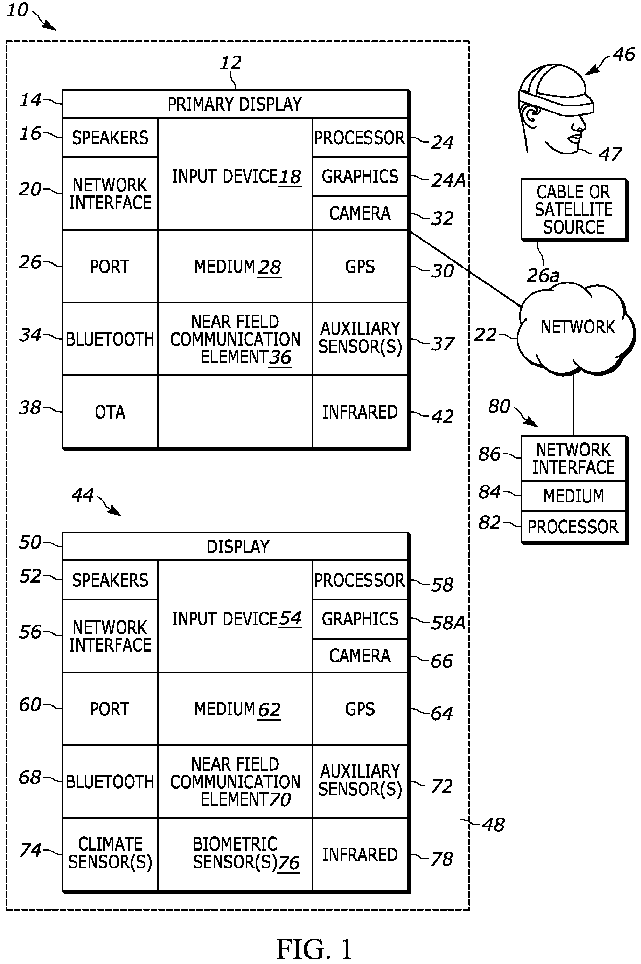

Now specifically referring to Figure 1, an example system 10 is shown, which may include one or more of the example devices mentioned above and described further below in accordance with present principles. The first of the example devices included in the system 10 is a consumer electronics (CE) device such as an audio video device (AVD) 12 such as but not limited to an Internet-enabled TV with a TV tuner (equivalently, set top box controlling a TV). However, the AVD 12 alternatively may be an appliance or household item, e.g. computerized Internet enabled refrigerator, washer, or dryer. The AVD 12 alternatively may also be a computerized Internet enabled ("smart") telephone, a tablet computer, a notebook computer, a wearable computerized device such as e.g. computerized Internet-enabled watch, a computerized Internet-enabled bracelet, other computerized Internet-enabled devices, a computerized Internet-enabled music player, computerized Internet-enabled head phones, a computerized Internet-enabled implantable device such as an implantable skin device, etc. Regardless, it is to be understood that the AVD 12 is configured to undertake present principles (e.g. communicate with other CE devices to undertake present principles, execute the logic described herein, and perform any other functions and/or operations described herein).

Accordingly, to undertake such principles the AVD 12 can be established by some or all of the components shown in Figure 1. For example, the AVD 12 can include one or more displays 14 that may be implemented by a high definition or ultra-high definition "4K" or higher flat screen and that may be touch-enabled for receiving user input signals via touches on the display. The AVD 12 may include one or more speakers 16 for outputting audio in accordance with present principles, and at least one additional input device 18 such as e.g. an audio receiver/microphone for e.g. entering audible commands to the AVD 12 to control the AVD 12. The example AVD 12 may also include one or more network interfaces 20 for communication over at least one network 22 such as the Internet, an WAN, an LAN, etc. under control of one or more processors 24. A graphics processor 24A may also be included. Thus, the interface 20 may be, without limitation, a Wi-Fi transceiver, which is an example of a wireless computer network interface, such as but not limited to a mesh network transceiver. It is to be understood that the processor 24 controls the AVD 12 to undertake present principles, including the other elements of the AVD 12 described herein such as e.g. controlling the display 14 to present images thereon and receiving input therefrom. Furthermore, note the network interface 20 may be, e.g., a wired or wireless modem or router, or other appropriate interface such as, e.g., a wireless telephony transceiver, or Wi-Fi transceiver as mentioned above, etc.

In addition to the foregoing, the AVD 12 may also include one or more input ports 26 such as, e.g., a high definition multimedia interface (HDMI) port or a USB port to physically connect (e.g. using a wired connection) to another CE device and/or a headphone port to connect headphones to the AVD 12 for presentation of audio from the AVD 12 to a user through the headphones. For example, the input port 26 may be connected via wire or wirelessly to a cable or satellite source 26a of audio video content. Thus, the source 26a may be, e.g., a separate or integrated set top box, or a satellite receiver. Or, the source 26a may be a game console or disk player containing content such as computer game software and databases. The source 26a when implemented as a game console may include some or all of the components described below in relation to the CE device 44.

The AVD 12 may further include one or more computer memories 28 such as disk-based or solid-state storage that are not transitory signals, in some cases embodied in the chassis of the AVD as standalone devices or as a personal video recording device (PVR) or video disk player either internal or external to the chassis of the AVD for playing back AV programs or as removable memory media. Also in some embodiments, the AVD 12 can include a position or location receiver such as but not limited to a cellphone receiver, GPS receiver and/or altimeter 30 that is configured to e.g. receive geographic position information from at least one satellite or cellphone tower and provide the information to the processor 24 and/or determine an altitude at which the AVD 12 is disposed in conjunction with the processor 24. However, it is to be understood that another suitable position receiver other than a cellphone receiver, GPS receiver and/or altimeter may be used in accordance with present principles to e.g. determine the location of the AVD 12 in e.g. all three dimensions.

Continuing the description of the AVD 12, in some embodiments the AVD 12 may include one or more cameras 32 that may be, e.g., a thermal imaging camera, a digital camera such as a webcam, and/or a camera integrated into the AVD 12 and controllable by the processor 24 to gather pictures/images and/or video in accordance with present principles. Any of the cameras described herein may employ the high spectrum camera example or multiple examples described further below.

Also included on the AVD 12 may be a Bluetooth transceiver 34 and other Near Field Communication (NFC) element 36 for communication with other devices using Bluetooth and/or NFC technology, respectively. An example NFC element can be a radio frequency identification (RFID) element. Zigbee also may be used.

Further still, the AVD 12 may include one or more auxiliary sensors 37 (e.g., a motion sensor such as an accelerometer, gyroscope, cyclometer, or a magnetic sensor, an infrared (IR) sensor, an optical sensor, a speed and/or cadence sensor, a gesture sensor (e.g. for sensing gesture command), etc.) providing input to the processor 24. The AVD 12 may include an over-the-air TV broadcast port 38 for receiving OTA TV broadcasts providing input to the processor 24. In addition to the foregoing, it is noted that the AVD 12 may also include an infrared (IR) transmitter and/or IR receiver and/or IR transceiver 42 such as an IR data association (IRDA) device. A battery (not shown) may be provided for powering the AVD 12.

Still referring to Figure 1, in addition to the AVD 12, the system 10 may include one or more other CE device types. In one example, a first CE device 44 may be used to send computer game audio and video to the AVD 12 via commands sent directly to the AVD 12 and/or through the below-described server while a second CE device 46 may include similar components as the first CE device 44. In the example shown, the second CE device 46 may be configured as a VR headset worn by a player 47 as shown, or a hand-held game controller manipulated by the player 47. In the example shown, only two CE devices 44, 46 are shown, it being understood that fewer or greater devices may be used.

In the example shown, to illustrate present principles all three devices 12, 44, 46 are assumed to be members of an entertainment network in, e.g., a home, or at least to be present in proximity to each other in a location such as a house. However, present principles are not limited to a particular location, illustrated by dashed lines 48, unless explicitly claimed otherwise.

The example non-limiting first CE device 44 may be established by any one of the above-mentioned devices, for example, a portable wireless laptop computer or notebook computer or game controller (also referred to as "console"), and accordingly may have one or more of the components described below. The first CE device 44 may be a remote control (RC) for, e.g., issuing AV play and pause commands to the AVD 12, or it may be a more sophisticated device such as a tablet computer, a game controller communicating via wired or wireless link with the AVD 12, a personal computer, a wireless telephone, etc.

Accordingly, the first CE device 44 may include one or more displays 50 that may be touch-enabled for receiving user input signals via touches on the display. The first CE device 44 may include one or more speakers 52 for outputting audio in accordance with present principles, and at least one additional input device 54 such as e.g. an audio receiver/microphone for e.g. entering audible commands to the first CE device 44 to control the device 44. The example first CE device 44 may also include one or more network interfaces 56 for communication over the network 22 under control of one or more CE device processors 58. A graphics processor 58A may also be included. Thus, the interface 56 may be, without limitation, a Wi-Fi transceiver, which is an example of a wireless computer network interface, including mesh network interfaces. It is to be understood that the processor 58 controls the first CE device 44 to undertake present principles, including the other elements of the first CE device 44 described herein such as e.g. controlling the display 50 to present images thereon and receiving input therefrom. Furthermore, note the network interface 56 may be, e.g., a wired or wireless modem or router, or other appropriate interface such as, e.g., a wireless telephony transceiver, or Wi-Fi transceiver as mentioned above, etc.

In addition to the foregoing, the first CE device 44 may also include one or more input ports 60 such as, e.g., a HDMI port or a USB port to physically connect (e.g. using a wired connection) to another CE device and/or a headphone port to connect headphones to the first CE device 44 for presentation of audio from the first CE device 44 to a user through the headphones. The first CE device 44 may further include one or more tangible computer readable storage medium 62 such as disk-based or solid-state storage. Also in some embodiments, the first CE device 44 can include a position or location receiver such as but not limited to a cellphone and/or GPS receiver and/or altimeter 64 that is configured to e.g. receive geographic position information from at least one satellite and/or cell tower, using triangulation, and provide the information to the CE device processor 58 and/or determine an altitude at which the first CE device 44 is disposed in conjunction with the CE device processor 58. However, it is to be understood that another suitable position receiver other than a cellphone and/or GPS receiver and/or altimeter may be used in accordance with present principles to e.g. determine the location of the first CE device 44 in e.g. all three dimensions.

Continuing the description of the first CE device 44, in some embodiments the first CE device 44 may include one or more cameras 66 that may be, e.g., a thermal imaging camera, a digital camera such as a webcam, and/or a camera integrated into the first CE device 44 and controllable by the CE device processor 58 to gather pictures/images and/or video in accordance with present principles. Also included on the first CE device 44 may be a Bluetooth transceiver 68 and other Near Field Communication (NFC) element 70 for communication with other devices using Bluetooth and/or NFC technology, respectively. An example NFC element can be a radio frequency identification (RFID) element.

Further still, the first CE device 44 may include one or more auxiliary sensors 72 (e.g., a motion sensor such as an accelerometer, gyroscope, cyclometer, or a magnetic sensor, an infrared (IR) sensor, an optical sensor, a speed and/or cadence sensor, a gesture sensor (e.g. for sensing gesture command), etc.) providing input to the CE device processor 58. The first CE device 44 may include still other sensors such as e.g. one or more climate sensors 74 (e.g. barometers, humidity sensors, wind sensors, light sensors, temperature sensors, etc.) and/or one or more biometric sensors 76 providing input to the CE device processor 58. In addition to the foregoing, it is noted that in some embodiments the first CE device 44 may also include an infrared (IR) transmitter and/or IR receiver and/or IR transceiver 78 such as an IR data association (IRDA) device. A battery (not shown) may be provided for powering the first CE device 44. The CE device 44 may communicate with the AVD 12 through any of the above-described communication modes and related components.

The second CE device 46 may include some or all of the components shown for the CE device 44. Either one or both CE devices may be powered by one or more batteries.

Now in reference to the afore-mentioned at least one server 80, it includes at least one server processor 82, at least one tangible computer readable storage medium 84 such as disk-based or solid-state storage, and at least one network interface 86 that, under control of the server processor 82, allows for communication with the other devices of Figure 1 over the network 22, and indeed may facilitate communication between servers and client devices in accordance with present principles. Note that the network interface 86 may be, e.g., a wired or wireless modem or router, Wi-Fi transceiver, or other appropriate interface such as, e.g., a wireless telephony transceiver.

Accordingly, in some embodiments the server 80 may be an Internet server or an entire server "farm" and may include and perform "cloud" functions such that the devices of the system 10 may access a "cloud" environment via the server 80 in example embodiments for, e.g., network gaming applications. Or, the server 80 may be implemented by one or more game consoles or other computers in the same room as the other devices shown in Figure 1 or nearby.

Further to what has been alluded to above, logical blocks, modules, and circuits described below can be implemented or performed with a general-purpose processor, a digital signal processor (DSP), a field programmable gate array (FPGA) or other programmable logic device such as an application specific integrated circuit (ASIC), discrete gate or transistor logic, discrete hardware components, or any combination thereof designed to perform the functions described herein. A processor can be implemented by a controller or state machine or a combination of computing devices. Thus, the methods herein may be implemented as software instructions executed by a processor, suitably configured application specific integrated circuits (ASIC) or field programmable gate array (FPGA) modules, or any other convenient manner as would be appreciated by those skilled in those art. Where employed, the software instructions may be embodied in a non-transitory device such as a hard disk drive, CD ROM or Flash drive. The software code instructions may also be downloaded over the Internet.

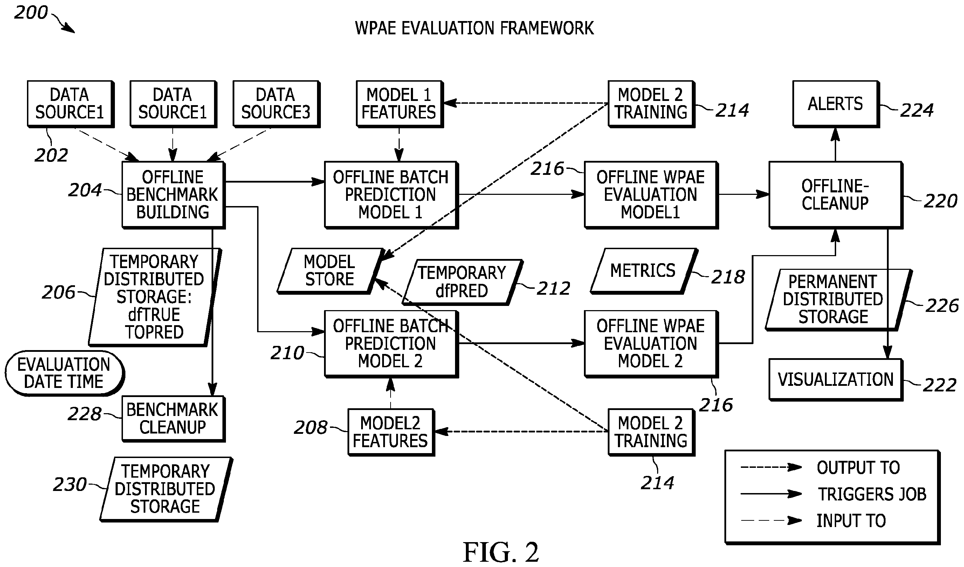

Figure 2 illustrates an example architecture 200 consistent with present principles, including hardware storage devices and software modules that are executed by appropriate processors. Multiple data sources 202 feed an offline benchmark building module 204 that accumulates real world customer interactions, sometimes referred to herein as "ground truth", such as actual product purchases, time dwelling on web pages, product rankings, etc. The data sources may include computer-based sales databases of various enterprises. This "ground truth" data may be stored in computer storage 206.

Model features 208 for each of plural prediction models are supplied to respective offline batch prediction modules 210 with associated storages 212. The model features are the instructions that the prediction models are based on using respective model training process 214, and the offline batch prediction modules 210 are the model execution models that output the predictions of the models based on the features 208 of the models.

Predicted model values from the modules 210 along with corresponding ground truth data are provided to respective offline probability absolute error (PAE) evaluation module 216, which may be implemented using weights as also discussed below to render weighted PAE (WPAE) that evaluate the efficacy of the models taking in account variety or position-based rankings, and output to metrics 218. The outputs of the PAEs 216 (metrics 218) are used to identify the "best" from among the plural models 210 using an offline cleanup utility 220, which may provide visualization 222 of the results as well as alerts as the nature and availability of the results through various storages 226. In the example shown, a benchmark cleanup utility 228 with associated storage 230 also may be provided to groom the ground truth data for the PAE evaluation modules 216. The storages herein described may be distributed.

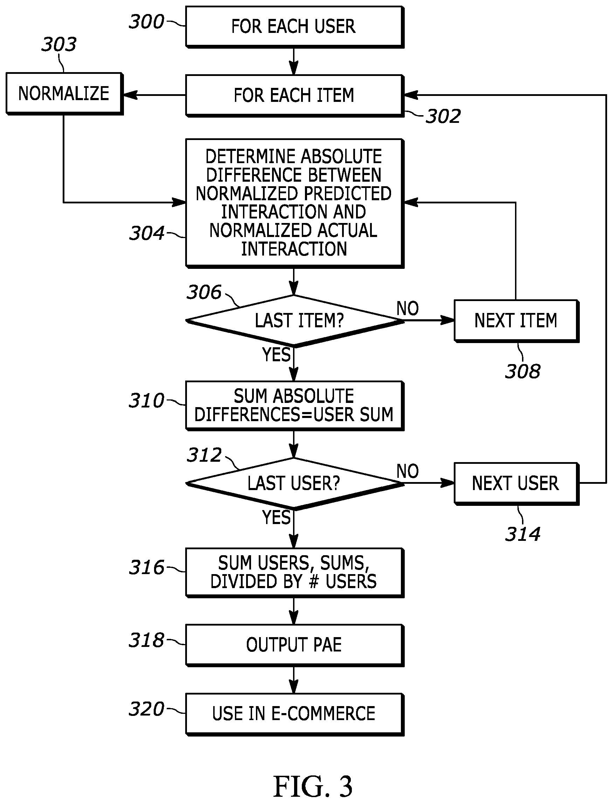

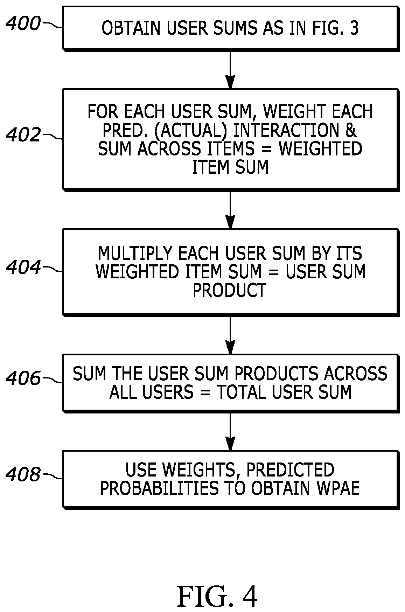

Figures 3 and 4 illustrate example logic for determining probability absolute errors (PAE) among multiple prediction models and weighted PAE (WPAE), respectively. In general, assume that a user-item relevance model aims to model a relevance function $p(u,i) \rightarrow s$, so that, for each user $u$ and item $i$, there is a relevance score "$s$" to measure how the item is related to the user.

Examples of "items" can include computer simulations such as computer games, downloadable content (DLC) such as desktop themes, avatars, Add-Ons, and virtual currency, bundles, demonstration videos or other demonstration content, stories from a "what's new" news feed, friends, people, communities, and user-generated content (UGC) such as UGC videos, UGC broadcasts, and UCG images.

With the above in mind, PAE is introduced as follows:

$$PAE = \frac{1}{U}\sum_{u \in U}\sum_{i \in I_u}|\widehat{p_{u,i}} - p_{u,i}|$$

Where $U$ is the set of users, and $|U|$ is the total number of users, $u$ represents a single arbitrary user, and $i$ represents a single arbitrary item. $I_u$ contains the actual *positive* items $i$ that user $u$ has interacted with, i.e., ground truth as recorded from actual user interactions with the item. $p_{u,i}$ represents the actual normalized interaction score of user $u$ to item $i$, for example, 1 or 0 if this is an purchase event (1= purchase, 0 = no purchase); 1 or 9 for time spent on a page (which will then be normalized to numbers 0.1 and 0.9), etc. Similarly, $\widehat{p_{u,i}}$ is the predicted score of the model under test for user $u$ and item $i$. The normalization constraint makes sure that for each user $u$, the scores will sum up to 1, for all items that the user has interacted with. In other words:

$$\sum_i p_{u,i} = 1, \sum_i \widehat{p_{u,i}} = 1.$$

Commencing at block 300, for each user in the data set, the logic moves to block 302 to execute the following steps for each item the user is predicted to interact with (or not). Moving to block 303, a normalization process is executed to ensure the predicted interaction and the actual interaction numbers follow the normalization constraint described above. At block 304, as indicated in the equation above the absolute difference is determined between the normalized predicted interaction and the normalized actual interaction of the user with the item under test. If it is determined that the item under test is not the last item at decision diamond 306, the logic flows to block 308 to retrieve the next item, i.e., the predicted and actual interactions for the next item for the user under test, returning to block 304 to proceed as described.

On the other hand, responsive to determining at state 306 that the last item has been processed for the user under test, the logic moves to block 310 to sum the absolute differences determined at block 304 for that user. The logic then determines at state 312 whether the user under test is the last user to be processed, and if not, the logic moves to block 314 to retrieve the data associated with the next user, returning to block 302 to execute as described above.

In contrast, responsive to determining at state 312 that interaction information for the last user has been processed, the logic moves to block 316 to sum the user sums from the iterations at block 310. The sum of the user sums is divided by the total number of users to render the PAE for the model under test, which is output at block 318. The process is repeated for all prediction models sought to be evaluated, with the model having the lowest PAE being indicated as the "best model" for use in e-commerce or other applications at block 320.

Note that owing to the normalization discussed above, PAE can be any value between zero (0), which is a perfect model, sometimes referred to herein as an "oracle", and two (2), which is a misguided model that predicts nothing correctly.

By way of non-limiting example, the "best" model may be used to predict what product a particular user might purchase, so that advertising of that product can be targeted to that user. Or, the "best" model may be used to predict how a user will rank a list of products, so that advertising of products higher on the list can be targeted to that user and products lower on the list not advertised to that user. Or, the "best" model may be used to predict how long a user might dwell on a particular web page, so that targeted ads can be presented on web pages the model predicts the user will dwell a relatively long time on.

To introduce Figure 4, present principles recognize that in some special cases when applying PAE, it may be biased towards certain hugely popular items if the actual data distribution is represented in such way. Present principles seek a metric that rewards variety in the sense that it is desired to reward in higher proportions the cases of predicting lesser popular items correctly. In other words, correct predictions on more popular items will be discounted according to a monotonic transformation. Other example special cases include position-based ranking where correct predictions that are ranked higher will be rewarded according to a position-based transformation.

With the above in mind, a weighted PAW (WPAE) is introduced as follows:

$$WPAE = \frac{1}{\sum_{u \in U} \sum_{i \in \widehat{I_u}} w_i \widehat{p_{u,i}}} \sum_{u \in U} (\sum_{i \in \widehat{I_u}} w_i \widehat{p_{u,i}}) \cdot (\sum_{i \in \widehat{I_u}} |\widehat{p_{u,i}} - p_{u,i}|)$$

Here $\widehat{I_u}$ contains the predictions and $I_u$ contains the actual *positive* items $i$ that user $u$ has interacted with, $w_i$ is the discounted weight associated with such item i, calculated from the ground truth, which can be 1 if no discount is enforced, or can be any monotonic transformation, for example, discounts related to item frequency, square root of frequency divided by frequency $(\sqrt{freq}/freq)$ or log(*freq*)/*freq.* In position based ranking examples, the weight could be, say, *N - position,* where *N* is of the top N predictions to be considered and *position* is the ranking position of a specific item.

For an "oracle" (i.e., a perfect model that knows the exact ground truth), it will still have WPAE = 0. For a model that totally misses the truth, it will still have WPAE = 2. Figure 4 illustrates further. Commencing at block 400, individual user sums are obtained in the same manner as shown in states 304-310 in Figure 3. Moving to block 402, for each user sum, each predicted interaction is weighted to produce a weighted predicted interaction and the weighted prediction interactions are summed to produce a weighted item sum. Moving to block 404, each user sum is multiplied by the weighted item sum to produce a user sum product, with the user sum products for all users being summed at block 406. The sum at block 406 is processed at block 408 as follows to establish the WPAE for the model under test: for each item that the model predicted this target will be non-negative (e.g., the user will purchase/read/click/dwell on this item), calculate the value of weight w_l * predicted probability p_u,l. Finally, sum over all items for each target user, and sum then sum over all users.

***Example One***

As an example, suppose we have two items, item1 with frequency 70%, and item2 with frequency 30%. Users 1 to 7 purchased item1, and users 8 to 10 purchased item2.

A naive model predicting all item1 will predict correctly 7 times and incorrectly 3 times. Among the 7 times, for each user the individual error between predicted and ground truth is 0; among the 3 times, for each user the individual error is 2.

Without a discount, w1 = 1, w2 = 1. Recall that each user only purchased one item so the predicted interaction = for all *u, i, u* $\in$ 1, 2, *i* $\in$ 1...10. Then the WPAE equals 1/((1x7) + (1x3)) x (1x7x0+1x3x2) = 0.60 (no weights applied).

Now, if $\sqrt{freq}/freq)$ is used as discount weights, $w_1 = \sqrt{7}/7 = 0.37$ and $w_2 = \sqrt{3}/3 = 0.57$. Again, recall that in this example, each user only purchased one item so the new WPAE is:

$$1/(0.37 * 7 + 0.57 * 3) \text{ x } (0.37 * 7 * 0 + 0.57 * 3 * 2) = 0.79$$

Another model predicting item1 correctly 6 out of 7 times and predicting item2 correctly 1 out of 3 times will get:

$$WPAE = 1/(1 * 7 + 1 * 3) \text{ x } (1 * 1 * 2 + 1 * 2 * 2) = 0.60 \text{ (equal weights)}$$

and

$$WPAE = 1/(0.37 * 7 + 0.57 * 3) \text{ x } (0.37 * 1 * 2 + 0.57 * 2 * 2) = 0.7 \text{ (unequal weights)}$$

Yet another model predicting item1 correctly 4 out of 7 times and predicting item2 correctly 3 out of 3 times will get:

$$WPAE = 1/(1 * 7 + 1 * 3) \text{ x } (3 * 1 * 2 + 0 * 1 * 0) = 0.60 \quad \text{(no weights)}$$

$$WPAE = 1/(0.37 * 7 + 0.57 * 3) \text{ x } (0.37 * 3 * 2 + 0.57 * 1 * 0) = 0.51 \text{ (weights applied)}$$

A complete miss model predicting item1 correctly 0 out of 7 times and predicting item2 correctly 0 out of 3 times will get:

$$WPAE = 1/(1 * 7 + 1 * 3) \text{ x } (7 * 1 * 2 + 3 * 1 * 2) = 2 \text{ (no weights)}$$

$$WPAE = 1/(0.37 * 7 + 0.57 * 3) \text{ x } (0.37 * 7 * 2 + 0.57 * 3 * 2) = 2 \text{ (weights)}$$

*Example Two*

This example deals with cases in which a user purchases more than one item. Similar to the previous example, suppose we have two items. We differ from the previous example in that users 1 to 6 are assumed to have purchased item1, users 7 to 9 purchased item2, and user 10 purchased both items equally likely. There are 11 purchases now, with item1 being purchased 7 times and item2 being purchased 4 times. This distinction is important as shown below when the discount factor is calculated.

A naive model predicting all item1 will be correct 6 times and partially correct 1 time. Among the 6 times, for each user the individual error between predicted and actual is 0; among the 3 times, for each user the individual error is 2; among the 1 time, for each user the individual error is |0.5 - 1|+|0.5 - 0| = 1.

$$WPAE \text{ in this case} = 1/(1 * 7 + 1 * 3) \text{ x } (1 * 6 * 0 + 1 * 3 * 2 + 1 * 1 * 1) = 0.7$$

Now, with a weighted discount, the discounted weights must be known. $w_1$ for item1 is $\sqrt{7}/7 = 0.378$ and $w_2$ for item2 is $\sqrt{4}/4 = 0.5$. For user10 who purchased both items equally, the WPAE is |0.5 - 1|+|0.5 - 0| = 1, since this model predicted item1 for user10. Furthermore, the discount factor for user10 is the sum of *I* for that user f the weighted actual interactions, = 0.379 0.5+0.5 0.5 = 0.439. This discount factor should be taken into account in multiple places following our definition.

$$WPAE = 1/(.378*6 + 0.5*3 + 0.439) \text{ x } (0.378*6*0+0.5*3*2+0.439*1*1) = 0.81$$

A complete miss model predicts item1 correctly 0 out of 6 times, predicts item2 correctly 0 out of 3 times and predicts for user 10 incorrectly neither time (for convenience of illustration, we can assume that a complete miss model predicts another item, say item3 for user10.)

$$WPAE = 1/(1 * 7 + 1 * 3) \text{ x } (1*6*2 + 1*3*2 + 1*1*2) = 2$$

And its weighted WPAE remains 2, the highest score possible:

$$WPAE = 1/(0.37* 7 + 0.57* 2 + 0.47) \text{ x } (0.37 * 6 * 2 + 0.57 * 3 * 2 + 0.47 * 1 * 2) = 2$$

*Example Three*

Now assume four items and only two users. The item frequencies for four items are 4,3,2,1. Using a discount transformation of square root of freq/freq the discount factors are shown in the tables. The following tables shows the ground truth and four models with different predictions.

<u>User 1</u>

| | | | |
|---|---|---|---|
| Frequency | 4 | 3 | 2 | 1 |

(continued)

| discount $w_i$ | 0.5 | 0.6 | 0.7 | 1 |
|---|---|---|---|---|
| item | i1 | i2 | i3 | i4 |
| user1 truth | 0.5 | 0.5 | 0 | 0 |
| model 1 | 0 | 0 | 0 | 0 |
| model 2 | 0.6 | 0.4 | 0 | 0 |
| model 3 | 0.2 | 0.2 | 0.5 | 0.1 |
| model 4 | 0 | 0 | 0 | 1 |

_User 2_

| Frequency | 4 | 3 | 2 | 1 |
|---|---|---|---|---|
| discount $w_i$ | 0.5 | 0.6 | 0.7 | 1 |
| item | i1 | i2 | i3 | i4 |
| user2 truth | 1 | 0 | 0 | 0 |
| model 1 | 1 | 0 | 0 | 0 |
| model 2 | 0.6 | 0.4 | 0 | 0 |
| model 3 | 0.2 | 0.2 | 0.5 | 0.1 |
| model 4 | 0 | 0 | 0 | 1 |

For all models, user1 has the sum of items times weighted ground truth = .5*.5+.6*.5 = .55 and user 2 has .5*1 +.5 = 1, PAE for user2 is 1-1+0 = 0 and

$$WPAE = 1/(0.5 + 0.55) \text{ x } (0.55 * 1 + 0.5 * 0) = 0.52$$

For model2, PAE for user1 is 0.6 - 0.5 + 0.5 - 0.4 = 0.2, PAE for user2 is 1 - 0.6 + 0.4 = 0.8

$$WPAE \text{ in this case} = 1/(0.5 + 0.55) \text{ x } (0.55 * 0.2 + 0.5 * 0.8) = 0.48$$

Note that without adding the discount factor, model1 and model2 have exactly the same overall PAE. Here the discounting gives a small reward for predicting item2 (i2) correctly.
For model3, PAE for user1 is 0.5-0.2+0.5-0.2+0.5+0.1 = 0.3+0.3+(1- 0.4) = 1.2. PAE for user2 is 1 - 0.2 + 0.2 + 0.5 + 0.1 = 1 - 0.2 +(1 - 0.2) = 1.6

$$WPAE \text{ in this case} = 1/(0.5 + 0.55) \text{ x } (0.55 * 1.2 + 0.5 * 1.6) = 1.39$$

For model4, PAE for user1 is 0.5 + 0.5 + 1 = 2, PAE for user2 is 1 - 0 + 1 - 0 = 2

$$WPAE \text{ in this case is} = 1/(0.5 + 0.55) \text{ x } (0.55 * 2 + 0.5 * 2) = 2$$

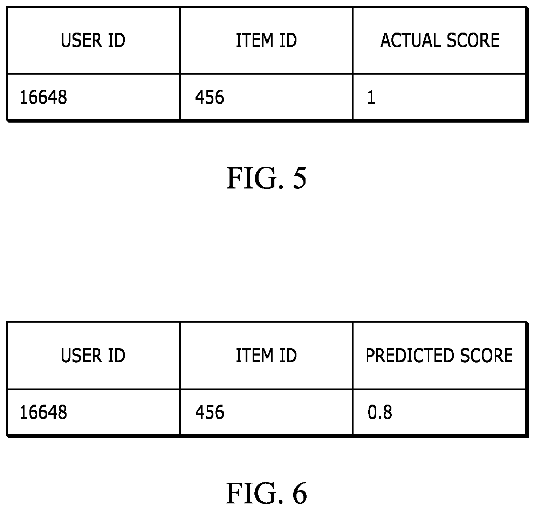

Figure 5 illustrates a data structure correlating a user to a ground truth interaction (or item) and a score of the interaction, in the example shown, "1", meaning that the user interacted (as opposed to not interacting) with the item. Figure 6 illustrates a data structure for a model prediction of the user interaction, in the example shown, 0.8. Typically, each user will be associated with multiple interactions (items) and corresponding ground truth and predicted scores, and each model will be associated with multiple users. Figures 5 and 6 essentially illustrate the input values in the equations above for PAE and WPAE.

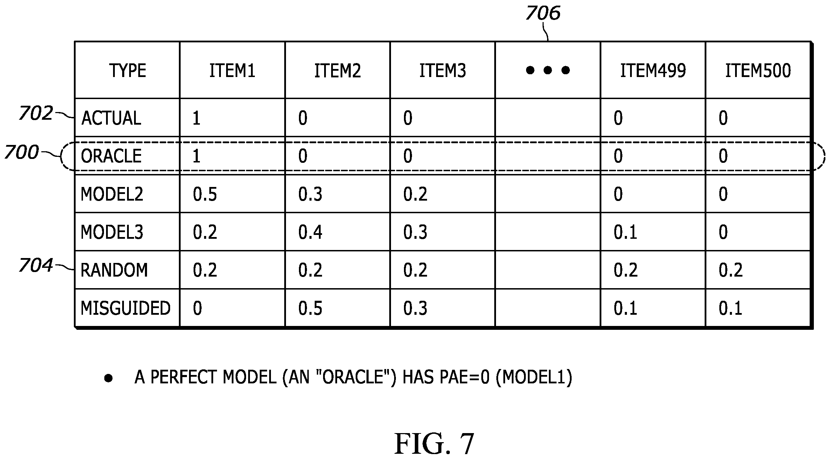

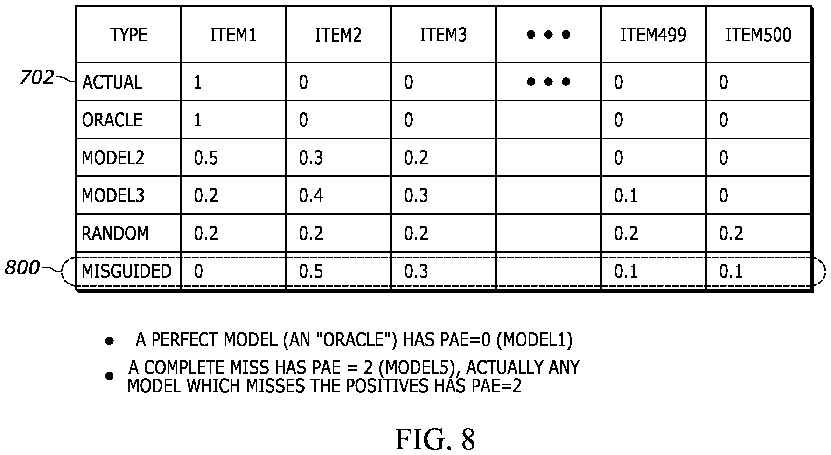

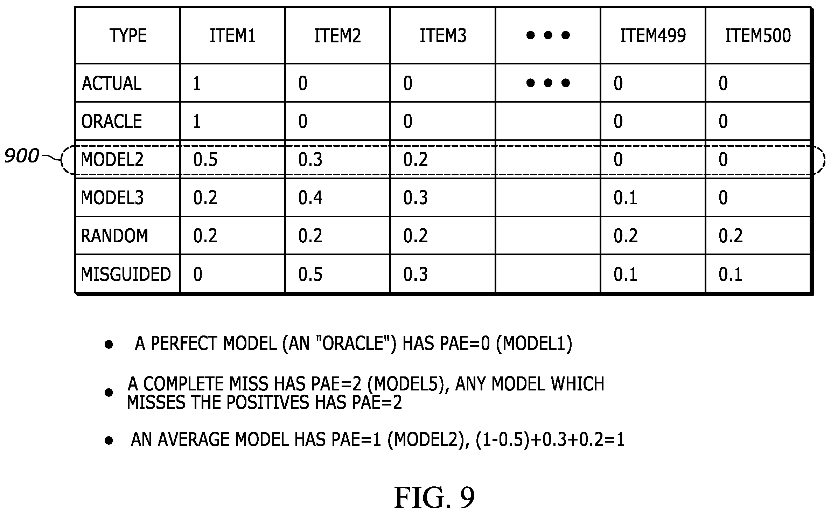

Figures 7 and 8 respectively indicate, for single positive item scenarios, a perfect ("oracle") model indicated by the oval 700 in Figure 7, which perfectly predicts actual or ground truth results 702 across all items (PAE=0), and a completely misguided model indicated by the oval 800 in Figure 8, which predicts zero actual or ground truth results 702 across all items (PAE= 2). Note that a perfectly random model 704 predicts the same probability for all items. Note further that normalization is indicated in the figures, in which the sum of all values for all items equals unity (1), it being understood that the values shown are indicated as summing to unity for clarity despite the ellipsis 706 which is used only to indicate that more items than shown typically are analyzed. Figure 9 indicates inside the oval 900 an average model with a PAE of 1.

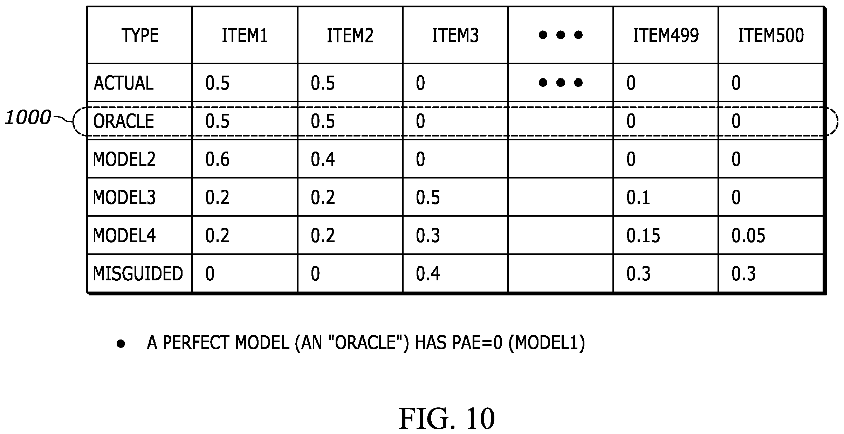

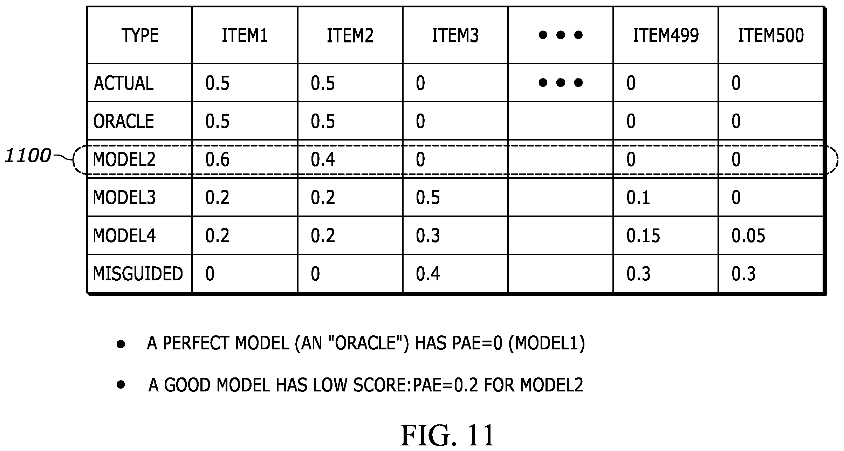

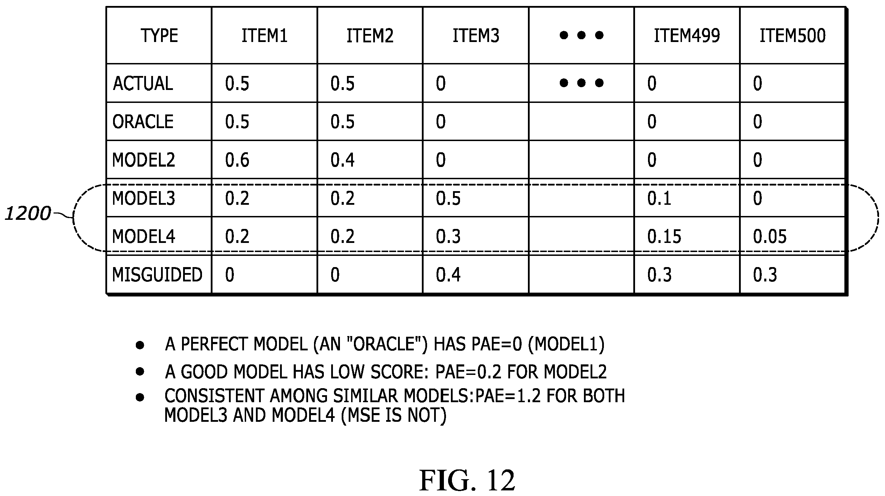

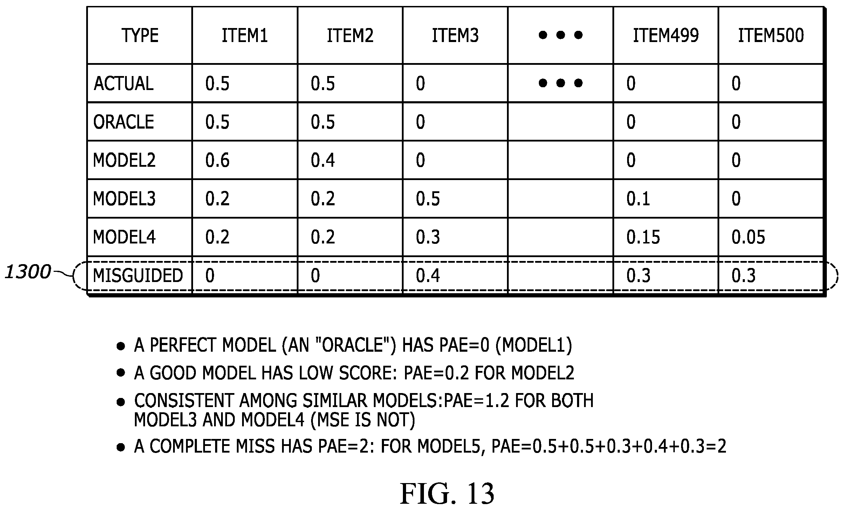

Figures 10-13 respectively illustrate, for multiple positive items, a perfect model 1000 (Figure 10), a good model 1100 (Figure 11), consistent models 1200 (Figure 12), and a misguided model 1300 (Figure 13).

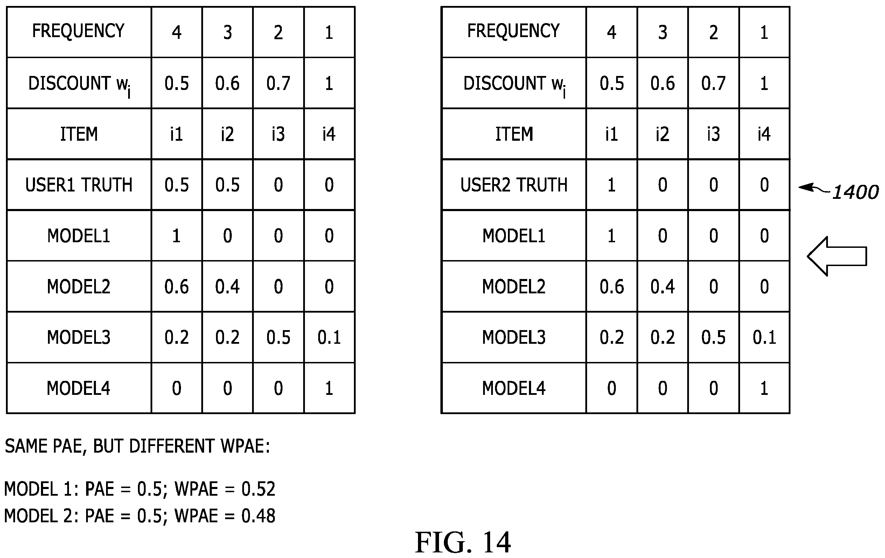

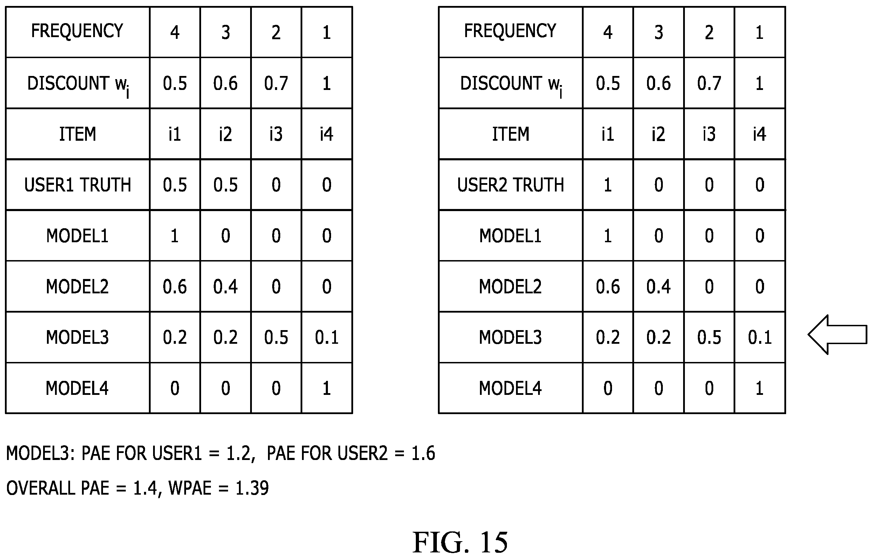

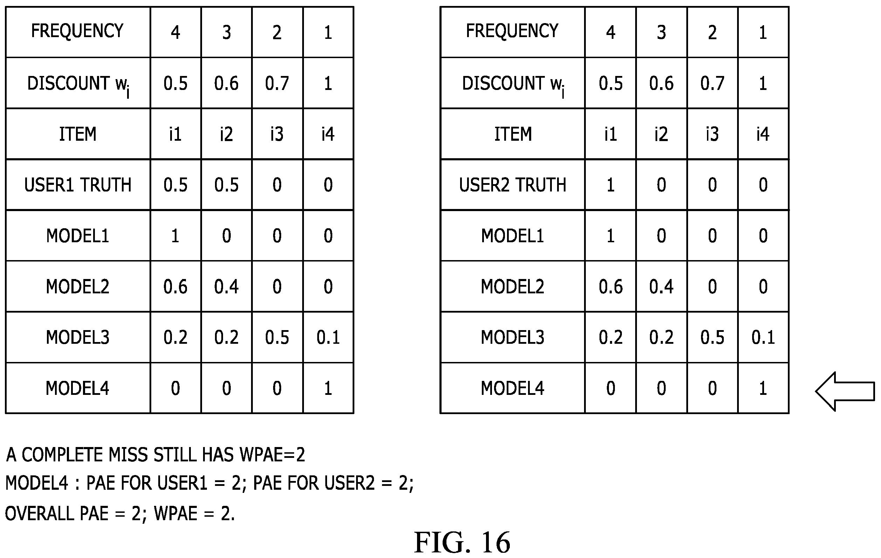

Figures 14 and 15 illustrate differences in measures between PAE and WPAE for certain models while figure 16 illustrates that for a perfectly misguided model, PAE and WPAE both so indicate. In Figure 14 two models 1 and 2 yield the same PAE for the conditions shown, but different WPAEs, owing to a more unbalanced ground truth statistic for user 2 compared to user 1 as shown in row 1400, with the remaining statistics being identical across both users for all four items. Figure 15 illustrates the same statistics for a less accurate model (model 3) with concomitant differences in PAE and WPAE. Figure 16 shows that for a perfectly misguided model (model 4), both measures (PAE and WPAE) are the same, indicating a complete miss.

In addition to or amplification of the advantages noted elsewhere herein with using present principles, PAE provides a consistent, flexible metric that advantageously abstracts away domain details and focuses on evaluation only. Evaluated models can incorporate domain knowledge or model specific information into the normalization (e.g., using top 20 or 30, confidence in scores). Ground truth can be normalized with business knowledge in mind (e.g., dealing with numeric values like play time, number of purchases, revenue gained; how to deal with negative values like refunds, negative reviews). The fixed range of [0, 2], with 0 as a perfect match and 2 as a complete miss makes PAE easily understandable, with lower scores meaning better models. PAE rewards models with high ranking power and normalizes probability as a proxy for ranking. Models predicting higher probability for a positive sample will score higher.

With respect to WPAE, it is noted that when actual data is skewed, evaluation may naturally reward models who take advantage of the skewness. For example, when one game (among 500 games) accounts for 17% of total purchases, simply predicting this one game will lead to a relatively low PAE. To reward models that are good at predicting the "long-tail" to award variety and coverage, WPAE is provided that is consistent and flexible because it is applicable to a wide range of scores and is flexible in incorporating domain knowledge into data and model normalization. WPAE also is flexible in balancing between enforcing data natural distribution and encouraging variety, and like PAE is easy to communicate and understand.

It will be appreciated that whilst present principals have been described with reference to some example embodiments, these are not intended to be limiting, and that various alternative arrangements may be used to implement the subject matter claimed herein.

**Claims**

1.   A device comprising:
      at least one computer storage that is not a transitory signal and that comprises instructions executable by at least one processor to:
      for a first model:

         determine, for each of plural sets of a user and an item, an absolute difference between a first value representing a model prediction of a user interaction with the item, and a second value representing an actual user interaction with the item, wherein the first values for each user are normalized such that the first values sum to unity, and the second values for each user are normalized such that the second values sum to unity;
         for each of a number of users, sum the absolute differences determined for plural items to render a user sum;
         sum the user sums to render a total;
         divide the total by the number of users to render a probability absolute error (PAE);
         determine a PAE for at least a second model;
         output the first model is being a better model based on the first model having a lower PAE than the second model, otherwise outputting the second model as the better model, wherein at least the second values for each user are normalized such that the second values sum to unity; and
         use the better model in providing e-commerce.

2.   The device of Claim 1, comprising the at least one processor.

3.   The device of Claim 1, wherein the instructions are executable to:

prior to summing the user sums, multiply at least some user sums by a sum of weighted second values representing the actual user interactions with the item to render weighted user sums; and
sum the weighted user sums to render a weighted users sum.

4. The device of Claim 3, wherein the instructions are executable to:
divide the weighted users sum by the sum of weighted second values over all users to render a weighted PAE (WPAE).

5. The device of Claim 4, wherein the instructions are executable to:

output the first model is being a better model based on the first model having a lower WPAE than the second model, otherwise outputting the second model as the better model; and
use the better model in providing e-commerce.

6. A computer-implemented method comprising:

receiving plural engagement relevance models useful for e-commerce and computer simulation purposes;
evaluating predictions of the plural models offline against ground truth to determine which is the better model at predicting at least one metric;
the evaluating comprising:

summing absolute errors between ground truth and model predictions for each of multiple users, and normalizing the sum of all prediction statistics to unity.

7. The method of Claim 6, comprising:
applying weights to reduce skew in evaluation by accounting for biases toward disproportionately popular items.

8. The method of Claim 6, wherein the metric comprises one or more selected from the list consisting of:

i. at least one product likely to be purchased;
ii. at least one period a user remains on a web page;
iii. at least one ranking of products; and
iv. at least one ranking of services.

9. An apparatus comprising:

at least one processor;
at least one computer storage accessible to the processor and comprising instructions executable by the processor to:

determine, for a first model, a first probability absolute error (PAE) having a value of between zero and two, inclusive;
determine, for a second model, a second PAE having a value of between zero and two, inclusive;
responsive to the first PAE being less than the second PAE, use the first model to predict user interactions in e-commerce; and
responsive to the first PAE being greater than the second PAE, use the second model to predict user interactions in e-commerce.

10. The apparatus of Claim 9, wherein the first PAE is determined as follows:

$$PAE = \frac{1}{U} \sum_{u \in U} \sum_{i \in I_u} |\widehat{p_{u,i}} - p_{u,i}|$$

11. The apparatus of Claim 9, wherein the instructions are executable to:

determine, for each of plural sets of a user and an item, an absolute difference between a first value representing a model prediction of a user interaction with the item, and a second value representing an actual user interaction with the item, wherein the first values for each user are normalized such that the first values sum to unity, and the second values for each user are normalized such that the second values sum to unity;

for each of a number of users, sum the absolute differences determined for plural items to render a user sum; sum the user sums to render a total; and

divide the total by the number of users to render the first PAE, wherein at least the first values are normalized to unity.

12. The apparatus of Claim 11, wherein the instructions are executable to:

prior to summing the user sums, multiply at least some user sums by a sum of weighted second values representing the actual user interactions with the item to render weighted user sums; and

sum the weighted user sums to render a weighted users sum.

13. The apparatus of Claim12, wherein the instructions are executable to:

divide the weighted users sum by the sum of weighted second values over all users to render a weighted PAE (WPAE).

14. The apparatus of Claim 14, wherein the instructions are executable to:

output the first model is being a better model based on the first model having a lower WPAE than the second model, otherwise outputting the second model as the better model; and

use the better model in providing e-commerce.

15. The apparatus of Claim 13, wherein the instructions are executable to determine WPAE using:

$$WPAE = \frac{1}{\sum_{u \in U} \sum_{i \in \widehat{I_u}} w_i \widehat{p_{u,i}}} \sum_{u \in U} \left( \sum_{i \in \widehat{I_u}} w_i \widehat{p_{u,i}} \right) \cdot \left( \sum_{i \in \widehat{I_u}} |\widehat{p_{u,i}} - p_{u,i}| \right)$$

FIG. 1

WPAE EVALUATION FRAMEWORK

FIG. 2

FIG. 3

400 — OBTAIN USER SUMS AS IN FIG. 3

402 — FOR EACH USER SUM, WEIGHT EACH PRED. (ACTUAL) INTERACTION & SUM ACROSS ITEMS = WEIGHTED ITEM SUM

404 — MULTIPLY EACH USER SUM BY ITS WEIGHTED ITEM SUM = USER SUM PRODUCT

406 — SUM THE USER SUM PRODUCTS ACROSS ALL USERS = TOTAL USER SUM

408 — USE WEIGHTS, PREDICTED PROBABILITIES TO OBTAIN WPAE

FIG. 4

| USER ID | ITEM ID | ACTUAL SCORE |
|---------|---------|--------------|
| 16648   | 456     | 1            |

## FIG. 5

| USER ID | ITEM ID | PREDICTED SCORE |
|---------|---------|-----------------|
| 16648   | 456     | 0.8             |

## FIG. 6

EP 3 745 341 A1

706

| TYPE | ITEM1 | ITEM2 | ITEM3 | • • • | ITEM499 | ITEM500 |
|---|---|---|---|---|---|---|
| ACTUAL | 1 | 0 | 0 | | 0 | 0 |
| ORACLE | 1 | 0 | 0 | | 0 | 0 |
| MODEL2 | 0.5 | 0.3 | 0.2 | | 0 | 0 |
| MODEL3 | 0.2 | 0.4 | 0.3 | | 0.1 | 0 |
| RANDOM | 0.2 | 0.2 | 0.2 | | 0.2 | 0.2 |
| MISGUIDED | 0 | 0.5 | 0.3 | | 0.1 | 0.1 |

702

700

704

- A PERFECT MODEL (AN "ORACLE") HAS PAE=0 (MODEL1)

FIG. 7

| TYPE | ITEM1 | ITEM2 | ITEM3 | • • • | ITEM499 | ITEM500 |
|---|---|---|---|---|---|---|
| ACTUAL | 1 | 0 | 0 | • • • | 0 | 0 |
| ORACLE | 1 | 0 | 0 | | 0 | 0 |
| MODEL2 | 0.5 | 0.3 | 0.2 | | 0 | 0 |
| MODEL3 | 0.2 | 0.4 | 0.3 | | 0.1 | 0 |
| RANDOM | 0.2 | 0.2 | 0.2 | | 0.2 | 0.2 |
| MISGUIDED | 0 | 0.5 | 0.3 | | 0.1 | 0.1 |

- A PERFECT MODEL (AN "ORACLE") HAS PAE=0 (MODEL1)
- A COMPLETE MISS HAS PAE = 2 (MODEL5), ACTUALLY ANY MODEL WHICH MISSES THE POSITIVES HAS PAE=2

FIG. 8

EP 3 745 341 A1

EP 3 745 341 A1

| TYPE | ITEM1 | ITEM2 | ITEM3 | • • • | ITEM499 | ITEM500 |
|---|---|---|---|---|---|---|
| ACTUAL | 1 | 0 | 0 | • • • | 0 | 0 |
| ORACLE | 1 | 0 | 0 | | 0 | 0 |
| MODEL2 | 0.5 | 0.3 | 0.2 | | 0 | 0 |
| MODEL3 | 0.2 | 0.4 | 0.3 | | 0.1 | 0 |
| RANDOM | 0.2 | 0.2 | 0.2 | | 0.2 | 0.2 |
| MISGUIDED | 0 | 0.5 | 0.3 | | 0.1 | 0.1 |

900

- A PERFECT MODEL (AN "ORACLE") HAS PAE=0 (MODEL1)

- A COMPLETE MISS HAS PAE=2 (MODEL5), ANY MODEL WHICH MISSES THE POSITIVES HAS PAE=2

- AN AVERAGE MODEL HAS PAE=1 (MODEL2), (1-0.5)+0.3+0.2=1

## FIG. 9

| TYPE | ITEM1 | ITEM2 | ITEM3 | ••• | ITEM499 | ITEM500 |
|---|---|---|---|---|---|---|
| ACTUAL | 0.5 | 0.5 | 0 | ••• | 0 | 0 |
| ORACLE | 0.5 | 0.5 | 0 | | 0 | 0 |
| MODEL2 | 0.6 | 0.4 | 0 | | 0 | 0 |
| MODEL3 | 0.2 | 0.2 | 0.5 | | 0.1 | 0 |
| MODEL4 | 0.2 | 0.2 | 0.3 | | 0.15 | 0.05 |
| MISGUIDED | 0 | 0 | 0.4 | | 0.3 | 0.3 |

1000

- A PERFECT MODEL (AN "ORACLE") HAS PAE=0 (MODEL1)

FIG. 10

| TYPE | ITEM1 | ITEM2 | ITEM3 | • • • | ITEM499 | ITEM500 |
|------|-------|-------|-------|-------|---------|---------|
| ACTUAL | 0.5 | 0.5 | 0 | • • • | 0 | 0 |
| ORACLE | 0.5 | 0.5 | 0 | | 0 | 0 |
| MODEL2 | 0.6 | 0.4 | 0 | | 0 | 0 |
| MODEL3 | 0.2 | 0.2 | 0.5 | | 0.1 | 0 |
| MODEL4 | 0.2 | 0.2 | 0.3 | | 0.15 | 0.05 |
| MISGUIDED | 0 | 0 | 0.4 | | 0.3 | 0.3 |

1100

- A PERFECT MODEL (AN "ORACLE") HAS PAE=0 (MODEL1)

- A GOOD MODEL HAS LOW SCORE:PAE=0.2 FOR MODEL2

FIG. 11

| TYPE | ITEM1 | ITEM2 | ITEM3 | ••• | ITEM499 | ITEM500 |
|---|---|---|---|---|---|---|
| ACTUAL | 0.5 | 0.5 | 0 | ••• | 0 | 0 |
| ORACLE | 0.5 | 0.5 | 0 | | 0 | 0 |
| MODEL2 | 0.6 | 0.4 | 0 | | 0 | 0 |
| MODEL3 | 0.2 | 0.2 | 0.5 | | 0.1 | 0 |
| MODEL4 | 0.2 | 0.2 | 0.3 | | 0.15 | 0.05 |
| MISGUIDED | 0 | 0 | 0.4 | | 0.3 | 0.3 |

1200

- A PERFECT MODEL (AN "ORACLE") HAS PAE=0 (MODEL1)
- A GOOD MODEL HAS LOW SCORE: PAE=0.2 FOR MODEL2
- CONSISTENT AMONG SIMILAR MODELS:PAE=1.2 FOR BOTH MODEL3 AND MODEL4 (MSE IS NOT)

FIG. 12

| TYPE | ITEM1 | ITEM2 | ITEM3 | • • • | ITEM499 | ITEM500 |
|---|---|---|---|---|---|---|
| ACTUAL | 0.5 | 0.5 | 0 | • • • | 0 | 0 |
| ORACLE | 0.5 | 0.5 | 0 | | 0 | 0 |
| MODEL2 | 0.6 | 0.4 | 0 | | 0 | 0 |
| MODEL3 | 0.2 | 0.2 | 0.5 | | 0.1 | 0 |
| MODEL4 | 0.2 | 0.2 | 0.3 | | 0.15 | 0.05 |
| MISGUIDED | 0 | 0 | 0.4 | | 0.3 | 0.3 |

1300

- A PERFECT MODEL (AN "ORACLE") HAS PAE=0 (MODEL1)
- A GOOD MODEL HAS LOW SCORE: PAE=0.2 FOR MODEL2
- CONSISTENT AMONG SIMILAR MODELS:PAE=1.2 FOR BOTH MODEL3 AND MODEL4 (MSE IS NOT)
- A COMPLETE MISS HAS PAE=2: FOR MODEL5, PAE=0.5+0.5+0.3+0.4+0.3=2

FIG. 13

EP 3 745 341 A1

| FREQUENCY | 4 | 3 | 2 | 1 |
|---|---|---|---|---|
| DISCOUNT $w_i$ | 0.5 | 0.6 | 0.7 | 1 |
| ITEM | i1 | i2 | i3 | i4 |
| USER1 TRUTH | 0.5 | 0.5 | 0 | 0 |
| MODEL1 | 1 | 0 | 0 | 0 |
| MODEL2 | 0.6 | 0.4 | 0 | 0 |
| MODEL3 | 0.2 | 0.2 | 0.5 | 0.1 |
| MODEL4 | 0 | 0 | 0 | 1 |

| FREQUENCY | 4 | 3 | 2 | 1 |
|---|---|---|---|---|
| DISCOUNT $w_i$ | 0.5 | 0.6 | 0.7 | 1 |
| ITEM | i1 | i2 | i3 | i4 |
| USER2 TRUTH | 1 | 0 | 0 | 0 |
| MODEL1 | 1 | 0 | 0 | 0 |
| MODEL2 | 0.6 | 0.4 | 0 | 0 |
| MODEL3 | 0.2 | 0.2 | 0.5 | 0.1 |
| MODEL4 | 0 | 0 | 0 | 1 |

~1400

SAME PAE, BUT DIFFERENT WPAE:

MODEL 1: PAE = 0.5; WPAE = 0.52
MODEL 2: PAE = 0.5; WPAE = 0.48

FIG. 14

| FREQUENCY | 4 | 3 | 2 | 1 |
|---|---|---|---|---|
| DISCOUNT $w_i$ | 0.5 | 0.6 | 0.7 | 1 |
| ITEM | i1 | i2 | i3 | i4 |
| USER1 TRUTH | 0.5 | 0.5 | 0 | 0 |
| MODEL1 | 1 | 0 | 0 | 0 |
| MODEL2 | 0.6 | 0.4 | 0 | 0 |
| MODEL3 | 0.2 | 0.2 | 0.5 | 0.1 |
| MODEL4 | 0 | 0 | 0 | 1 |

| FREQUENCY | 4 | 3 | 2 | 1 |
|---|---|---|---|---|
| DISCOUNT $w_i$ | 0.5 | 0.6 | 0.7 | 1 |
| ITEM | i1 | i2 | i3 | i4 |
| USER2 TRUTH | 1 | 0 | 0 | 0 |
| MODEL1 | 1 | 0 | 0 | 0 |
| MODEL2 | 0.6 | 0.4 | 0 | 0 |
| MODEL3 | 0.2 | 0.2 | 0.5 | 0.1 |
| MODEL4 | 0 | 0 | 0 | 1 |

MODEL3: PAE FOR USER1 = 1.2,  PAE FOR USER2 = 1.6

OVERALL PAE = 1.4, WPAE = 1.39

FIG. 15

| FREQUENCY | 4 | 3 | 2 | 1 |
|---|---|---|---|---|
| DISCOUNT $w_i$ | 0.5 | 0.6 | 0.7 | 1 |
| ITEM | i1 | i2 | i3 | i4 |
| USER1 TRUTH | 0.5 | 0.5 | 0 | 0 |
| MODEL1 | 1 | 0 | 0 | 0 |
| MODEL2 | 0.6 | 0.4 | 0 | 0 |
| MODEL3 | 0.2 | 0.2 | 0.5 | 0.1 |
| MODEL4 | 0 | 0 | 0 | 1 |

| FREQUENCY | 4 | 3 | 2 | 1 |
|---|---|---|---|---|
| DISCOUNT $w_i$ | 0.5 | 0.6 | 0.7 | 1 |
| ITEM | i1 | i2 | i3 | i4 |
| USER2 TRUTH | 1 | 0 | 0 | 0 |
| MODEL1 | 1 | 0 | 0 | 0 |
| MODEL2 | 0.6 | 0.4 | 0 | 0 |
| MODEL3 | 0.2 | 0.2 | 0.5 | 0.1 |
| MODEL4 | 0 | 0 | 0 | 1 |

A COMPLETE MISS STILL HAS WPAE=2

MODEL4 : PAE FOR USER1 = 2; PAE FOR USER2 = 2;

OVERALL PAE = 2; WPAE = 2.

FIG. 16

| Europäisches Patentamt European Patent Office Office européen des brevets | **EUROPEAN SEARCH REPORT** | Application Number EP 20 17 4735 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/060738 A1 (ACHIN JEREMY [US] ET AL) 1 March 2018 (2018-03-01)<br>* paragraph [0076] - paragraph [0116] *<br>* paragraph [0214] - paragraph [0224] *<br>* paragraph [0309] - paragraph [0316] *<br>* figures 3, 5, 9 *<br>----- | 1-15 | INV.<br>G06Q30/02 |
| X | US 2018/096250 A1 (RICKARD JR SCOTT THURSTON [US] ET AL)<br>5 April 2018 (2018-04-05)<br>* paragraph [0068] - paragraph [0070] *<br>* paragraph [0072] - paragraph [0077] *<br>* figures 6, 8 *<br>----- | 1-15 | |

TECHNICAL FIELDS
SEARCHED (IPC)

G06Q

The present search report has been drawn up for all claims

| Place of search | Date of completion of the search | Examiner |
|---|---|---|
| The Hague | 26 June 2020 | Stark, Konrad |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 4735

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2020

| Patent document cited in search report | Publication date | Patent family member(s) | Publication date |
|---|---|---|---|
| US 2018060738 A1 | 01-03-2018 | US 2018060738 A1<br>US 2020090075 A1 | 01-03-2018<br>19-03-2020 |
| US 2018096250 A1 | 05-04-2018 | US 2018096250 A1<br>US 2018096372 A1 | 05-04-2018<br>05-04-2018 |

EPO FORM P0459

For more details about this annex : see Official Journal of the European Patent Office, No. 12/82